# FASCICULE DE BREVET EUROPEEN

(11) **EP 1 697 764 B1**
(45) Date de publication et mention de la délivrance du brevet: **07.07.2010**
(21) Numéro de dépôt: 04804686.6
(22) Date de dépôt: 06.12.2004
(51) Int. Cl.: G01S 15/52

(54) **PROCEDE DE VISUALISATION DES ECHOS RECUS PAR UN SONAR ACTIF UTILISANT UNE EMISSION A SPECTRE DE RAIES**
VERFAHREN ZUR VISUALISIERUNG VON DURCH EINEN AKTIVSONAR EMPFANGENEN ECHOS UNTER VERWENDUNG DER LINIENSPEKTRUMEMISSION
METHOD FOR VISUALISATION OF ECHOES RECEIVED BY AN ACTIVE SONAR USING A LINE SPECTRUM EMISSION

(30) Priorité: 24.12.2003 FR 0315353
(43) Date de publication de la demande: 06.09.2006
(73) Titulaire: THALES, 92200 Neuilly sur Seine (FR)
(72) Inventeur: ALINAT, Pierre, THALES Intellectual Property, F-94117 Arcueil (FR)
(74) Mandataire: Lucas, Laurent Jacques
(86) Numéro de dépôt international: PCT/EP2004/053281
(87) Numéro de publication internationale: WO 2005/071436

(56) Documents cités:
- FR-A- 2 853 417
- US-A- 5 455 806
- US-A- 5 481 504
- US-B1- 6 501 705
- PATENT ABSTRACTS OF JAPAN vol. 2000, no. 22, 9 mars 2001 (2001-03-09) -& JP 2001 133540 A (NEC CORP), 18 mai 2001 (2001-05-18)
- PATENT ABSTRACTS OF JAPAN vol. 0154, no. 06 (P-1263), 16 octobre 1991 (1991-10-16) -& JP 03 163385 A (NEC CORP), 15 juillet 1991 (1991-07-15)

## Description

L'invention décrite et revendiquée dans le présent document a pour objet un procédé permettant de visualiser sur une seule image les informations utiles obtenues par la mise en oeuvre d'un sonar actif à émission à spectre de raies. Ce procédé permet à un opérateur de visualiser simultanément les échos pouvant représenter un danger et de ce fait nécessitant une surveillance, ainsi que la réverbération et en particulier celle due aux réflexions sur le fond qui est souvent la plus gênante. Ce procédé est en particulier destiné aux systèmes sonars exploitant l'effet doppler pour caractériser les échos reçus.

Les sonars actifs émettent des signaux qui, dans la réalité, ont une durée T limitée et occupent une bande de fréquence B elle aussi limitée. De ces caractéristiques de bande et de durée, peuvent être mises à profit pour obtenir un gain de traitement en amplitude, fonction du produit B_{*}T, et une aptitude à séparer les signaux reçus dans le domaine temporel, avec une résolution fonction de 1/B et dans le domaine fréquentiel avec une résolution fonction de 1/T. Plus précisément pour chaque sonar on peut définir une fonction d'ambiguïté qui représente son aptitude à distinguer des échos en provenance de sources plus ou moins proches (la distance se traduisant par un retard de propagation) et allant plus ou moins vite (la vitesse se traduisant du fait de l'effet doppler par une modification du spectre de fréquence)

Les signaux large bande présentent l'intérêt de permettre une détection, une estimation de la distance et un pouvoir séparateur en distance d'autant meilleurs que la bande est large. Parmi ces signaux à large bande passante, les signaux modulés hyperboliquement en fréquence présentent l'avantage d'être insensibles à une altération doppler : en d'autres termes même affecté par l'effet doppler, le signal réfléchi est à l'image du signal émis et une cible sera détectée par le même détecteur quelle que soit sa vitesse, le gain de traitement étant inchangé. Cependant cette insensibilité s'accompagne d'une incertitude "doppler-retard" qui a pour conséquence que, sans information sur la distance, on ne sait pas précisément estimer la vitesse et inversement.

Les signaux à spectre de raies présentent au contraire l'avantage de bien séparer les échos en fonction de la vitesse relative du sonar et des cibles, l'effet doppler se traduisant par un décalage ou "glissement" de la fréquence du signal reçu par rapport à la fréquence émise. Cette propriété est particulièrement exploitée pour lutter contre le bruit de réverbération. La réverbération résulte de la réflexion du signal sur de multiples hétérogénéités en suspension ou sur le fond ou encore sur la surface. Ces réflecteurs étant fixes les signaux correspondants reçus dans une voie du sonar sont affectés d'un doppler qui ne dépend que de la vitesse du porteur et de la direction pointée par la voie de réception du sonar. Pour une cible mobile il en est de même mais l'effet doppler est augmenté du fait de la vitesse propre de la cible par rapport au porteur.

Par simple filtrage on peut ainsi différentier un écho de la réverbération et estimer la vitesse relative de la cible ayant renvoyé cet écho pour peu que la résolution en fréquence du sonar soit suffisante.

Les sonars actuels fonctionnent généralement suivant l'un ou l'autre de ces modes en émettant soit des signaux à large bande, soit des signaux à spectre de raies. Ainsi la demande FR 03 04042 déposée le 01/04/2003 par la demanderesse, décrit un sonar qui utilise simultanément les propriétés des signaux modulés en fréquence et des signaux à forte résolution en doppler tels que les signaux BPSK.

Les sonars à émissions à spectre de raies permettent d'appliquer facilement un traitement doppler aux signaux reçus et d'effectuer la classification des échos reçus, non seulement par l'intensité des signaux reçus correspondants, mais aussi par leurs fréquences doppler. Par rapport au porteur du sonar, un écho est alors caractérisé par trois paramètres, sa distance par rapport au porteur, le gisement dans lequel il se trouve et sa vitesse de déplacement. Le gisement peut être défini comme l'angle que fait la direction reliant le sonar à l'objet dont l'écho est reçu avec le cap du navire porteur.

Le paramètre de vitesse est en particulier important pour déterminer si l'objet détecté est susceptible de représenter une quelconque menace pour le porteur du sonar. Il permet également de manière avantageuse une amélioration du contraste. En effet l'écho réfléchi par une cible mobile de petite taille située dans une zone de forte réverbération panoramique du fond marin, est invisible avec une émission à large spectre car de niveau trop faible par rapport au niveau atteint par le signal de réverbération qui couvre uniformément l'ensemble de la bande. En revanche, il peut être facilement séparé du fouillis ambiant constitué par la réverbération panoramique, grâce au déplacement en fréquence dû au doppler qui résulte de la vitesse de la cible. Il peut ainsi être détecté et isolé.

Cependant l'utilisation du paramètre doppler pose à l'opérateur, un problème de visualisation des informations reçues. En effet en l'absence d'analyse doppler, chaque écho peut être figuré sur un plan, comme un point, ou une petite surface, ayant deux coordonnées: son gisement et sa distance. On peut donc, à partir d'un écran de visualisation classique, représenter les échos reçus. Cette représentation peut par exemple prendre la forme de spots lumineux dont la position et la taille reflètent la position et la taille des objets ayant renvoyé un écho. Le niveau de l'écho reçu étant par exemple rendu par l'intensité du spot lumineux, il est simple de prévoir d'acquérir les paramètres d'une cible par simple pointage de l'écho correspondant.

En revanche si on effectue une caractérisation doppler des échos, chaque écho est alors identifié par trois coordonnées: son gisement, sa distance et sa fréquence doppler. Une représentation simple dans un plan n'est alors plus possible.

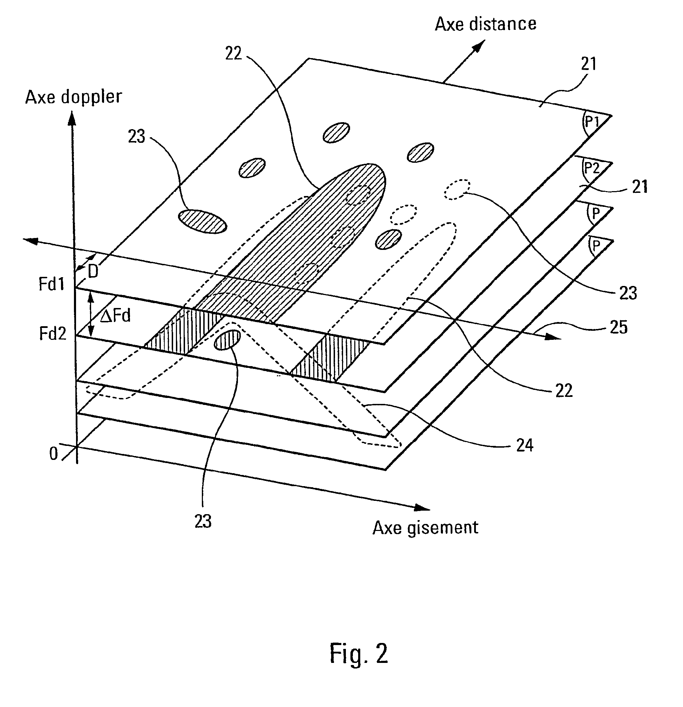

Une première solution consiste alors à représenter les échos détectés dans un espace à trois dimensions. Pour cela il est par exemple possible d'utiliser une représentation en perspective, réalisée suivant trois axes, un axe distance, un axe gisement et un axe doppler. Une telle représentation est illustrée par la figure 2. Cependant, bien que présentant l'avantage de permettre une représentation simultanée de tous les échos reçus, la représentation en perspective présente de sérieux inconvénients. Tout d'abord elle nécessite l'utilisation d'écrans spéciaux plus complexes et plus onéreux que de simples écrans de visualisation classiques. Ensuite, Une telle représentation rend plus complexe les opérations effectuées par les opérateurs chargés du sonar, telle que la désignation, au moyen d'un curseur par exemple, d'un écho affiché à l'écran. Enfin, dans le cas où un grand nombre d'échos sont reçus, la représentation en perspective perd sa lisibilité.

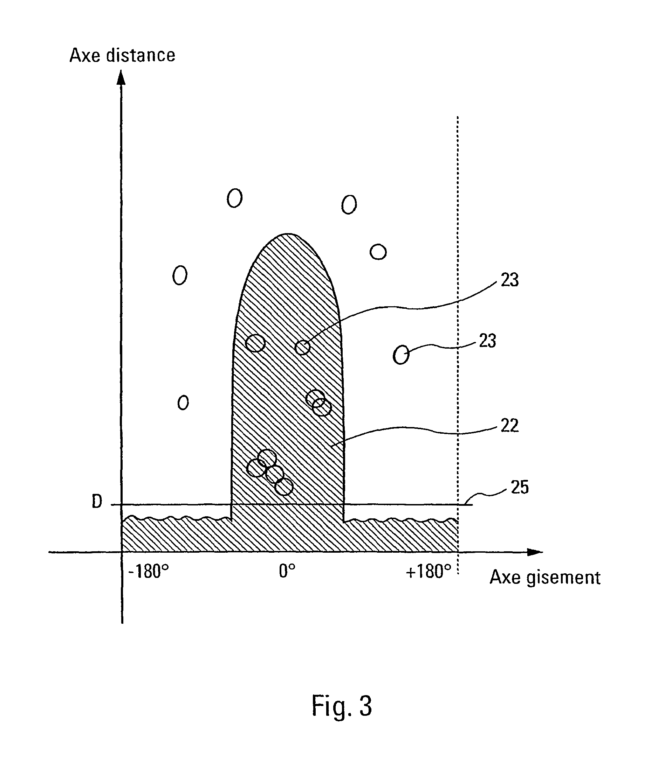

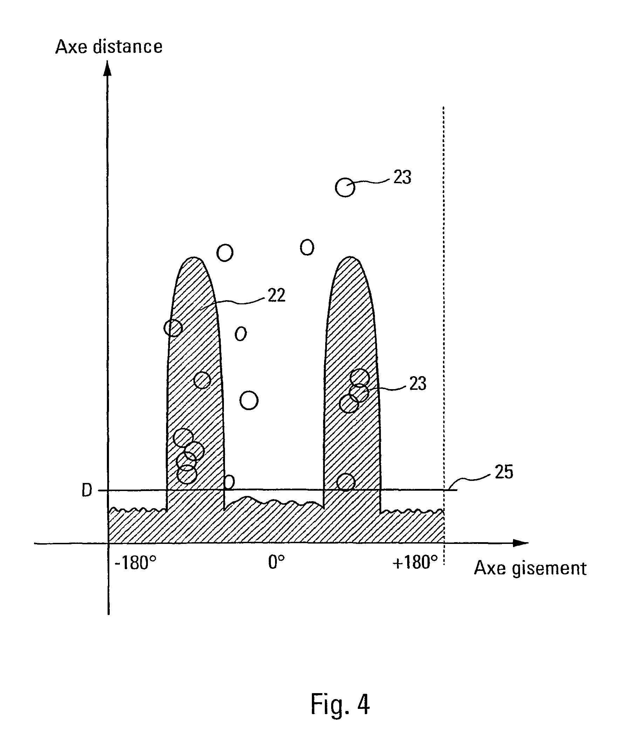

Une deuxième solution, connue de l'art antérieur et couramment utilisée, consiste à exploiter simultanément deux images planes simultanées. Une première image, telle que celles des figures 3 et 4, réalise l'affichage des échos reçus ayant une même fréquence doppler, dans un plan gisement-distance classique. La fréquence doppler souhaitée est sélectionnée par l'opérateur. Une telle image permet de visualiser simultanément tous les échos ayant une même fréquence doppler. En revanche les échos présentant une autre fréquence doppler ne sont pas représentés. L'analyse visuelle des échos se fait donc par explorations successives des différentes images disponibles.

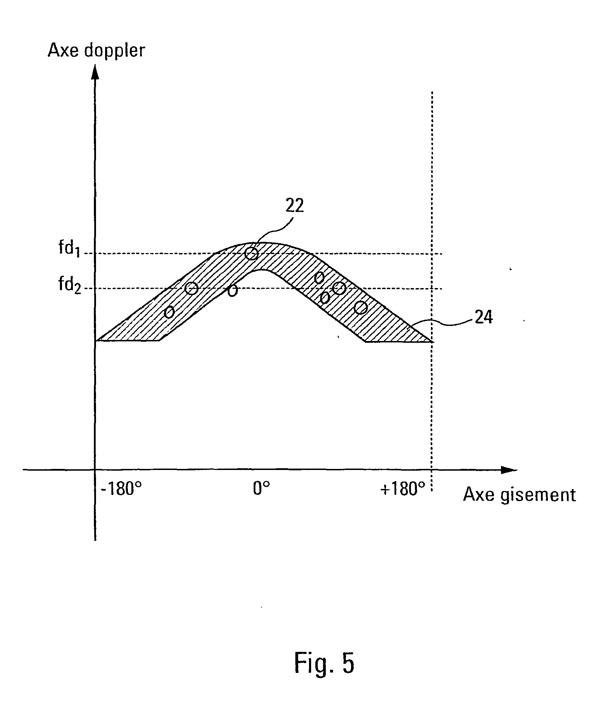

La représentation dans le plan gisement-distance est complétée par une deuxième image dans un plan gisement-doppler, telle que celle de la figure 5. Cette deuxième image permet de visualiser l'ensemble des échos situés à une distance donnée, quelle que soit leur fréquence doppler dans la plage doppler couverte par le sonar. Cette distance est par ailleurs sélectionnée par l'opérateur.

Cette deuxième solution qui consiste en une visualisation par pages, présente l'avantage d'être compatible des écrans de visualisation couramment utilisés. En revanche du fait qu'elle nécessite d'explorer successivement un grand nombre d'images dans deux plans différents, elle est d'une mise en oeuvre longue et fastidieuse pour l'opérateur, même si le passage de la représentation dans un plan à la représentation dans l'autre plan est généralement facilité par la mis en oeuvre d'outils informatiques. Elle est cause d'un certain nombre d'erreurs d'interprétation notamment en ce qui concerne la détection d'objet de relativement petite taille se déplaçant dans des zones à forte réverbération. D'autre part une telle représentation ne permet pas une visualisation globale de la réverbération panoramique des fonds marins, les échos matérialisant cette réverbération se trouvant répartis sur toutes les images, en fonction de leur fréquence doppler. Pour pouvoir bien analyser chaque image, l'opérateur doit alors effectuer une recomposition mentale de la réverbération panoramique.

Le document de brevet des Etats Unis d'Amérique, de William H. Hutson, délivré le 03/10/1995 et publié sous la référence US-A-5 455 806 décrit un procédé utilisant une matrice à trois dimensions pour exploiter des données acoustiques multidimensionnelles en diminuant l'influence de la réverbération et du bruit au profit des signaux utiles. Un des objets de ce brevet consiste, comme pour la présente invention, à trouver une solution pour représenter ces donnés multidimensionnelles. Les données sont cependant ici représentées sous une forme tridimensionnelle.

La demande de brevet japonais déposée par la société NEC CORP le 08/11/1999 et publiée le 18/05/2001 sous la référence 2001133540 présente par ailleurs un dispositif, un circuit, permettant de faire figurer sur une représentation dans un plan gisement-distance des symboles représentatifs d'échos, dont la forme et la taille varie en fonction de la valeur du doppler attaché aux échos considérés. Ce circuit permet ainsi de réaliser une représentation bidimensionnelle qui ne restitue cependant pas de représentation de la réverbération.

La demande de brevet japonais déposée par la société NEC CORP le 21/11/1989 et publiée le 15/07/1991 sous la référence 03163385 présente enfin un dispositif permettant de réaliser de manière rapide une recherche doppler sur un signal reçu.

Pour pallier les difficultés citées précédemment, le procédé selon l'invention propose une autre façon d'exploiter l'information doppler. Le procédé selon l'invention effectue, à partir d'une émission à spectre de raies, la recomposition d'une image plane synthétique présentée dans un plan gisement-distance. Cette image synthétique représente de manière différentiée les échos détectés et fait figurer sous forme de zones d'étendues variables les signaux acoustiques provenant des différentes forme de réverbération, notamment celle du fond.

A cet effet le procédé selon l'invention comporte plusieurs étapes. Une première étape de traitement doppler du signal sonar reçu, qui permet de classer les échos reçus en fonction de leur fréquence doppler. Les échos sont en particulier classés en deux catégories: les échos fixes et les échos mobiles.

Une deuxième étape consiste à synthétiser une image plane présentant l'ensemble des échos reçus, quelle que soit leur fréquence doppler, dans un seul plan gisement-distance, et à matérialiser chaque écho détecté par un symbole indiquant notamment s'il est fixe ou mobile.

Une dernière étape consiste enfin à superposer à la représentation des échos un signal reconstituant la réverbération panoramique du fond marin.

Le procédé selon l'invention présente l'avantage de conduire à une représentation panoramique plane, claire et facilement exploitable par un opérateur car semblable à celle utilisée pour l'exploitation de systèmes sonar émettant des ondes à spectre large. L'image obtenue présente en une seule fois à l'opérateur la totalité des informations utiles. Le procédé selon l'invention exploite avantageusement l'effet doppler afin d'obtenir une image ayant un contraste sensiblement amélioré qui permet en particulier à l'opérateur de visualiser des échos provenant d'objets de petite taille. Il présente également l'avantage d'offrir la possibilité d'un affichage différentié des échos fixes et mobiles. Le procédé selon l'invention présente encore l'avantage de restituer à l'opérateur une image de la réverbération du fond marin, réverbération qui constitue une aide pour l'exploitation de l'image sonar.

D'autres caractéristiques et avantages apparaîtront au fil de la description faite en regard des figures qui représentent :
la figure 1, l'illustration schématique des éléments représenté sur une image sonar, obtenu à partir d'un sonar classique émettant une onde à spectre large;
la figure 2, un exemple de représentation en trois dimensions d'échos sonars caractérisés par leur distance, leur gisement, et leur fréquence doppler;
la figure 3, La représentation schématique d'une image plane correspondant à l'affichage ,dans un plan gisement-distance p₁ mentionné sur la figure 2, des échos reçus ayant une même fréquence doppler;
la figure 4, La représentation schématique d'une image plane correspondant à l'affichage ,dans un plan gisement-distance p₂ mentionné sur la figure 2, des échos reçus ayant une même fréquence doppler;
la figure 5, La représentation schématique illustrant d'une image plane correspondant à l'affichage ,dans un plan gisement-doppler, des échos reçus et situés à une même distance D mentionnée sur la figure 2;
la figure 6, une illustration présentant une partition du plan gisement-doppler en différentes zones, partition exploitée par le procédé selon l'invention;
la figure 7, un organigramme simplifié du procédé selon l'invention;
la figure 8, une illustration de l'image obtenue par les procédé selon l'invention.

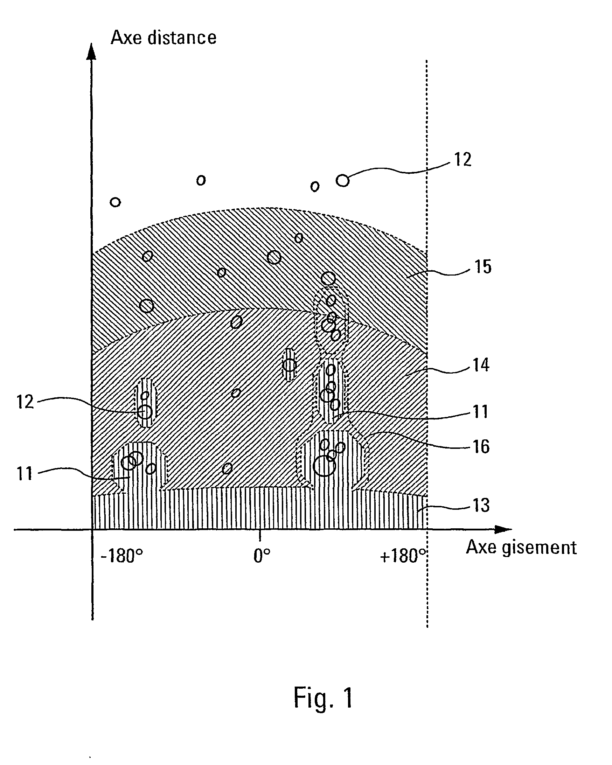

La figure 1 présente de manière volontairement simplifiée une image sonar telle que celle obtenue au moyen d'un sonar actif émettant un signal à modulation de fréquence hyperbolique ou "Hyperbolic Frequency Modulation" (HFM)......... selon la dénomination anglo-saxonne. L'image se présente de manière schématique comme un ensemble d'aires 11 de tailles variables sur lesquelles sont superposés des symboles géométriques 12. Sur une image réelle ces aires 11 correspondent à des zones ayant un niveau de bruit ou de réverbération situé dans une plage donnée. Elles sont généralement représentées comme des éléments colorés, de taille et de couleur variables, la couleur variant par exemple en fonction de l'intensité de l'écho reçu. Sur une telle image, les aires les plus étendues représentent généralement la réverbération de l'onde sonar sur le fond marin.

Le retard et l'intensité du signal reçu dépendent en particulier de la distance à laquelle se situe l'objet qui renvoie cet écho. Ainsi de manière générale on peut grossièrement distinguer, comme illustré sur la figure, des zones successives 13, 14 et 15, pour lesquelles l'intensité du signal reçu va globalement en décroissant. Un même relief sous-marin s'étendant sur une certaine distance, se trouve donc représentée par une succession d'aires 12 contiguës de couleur ou de contraste différents. Le contour global 16 de l'ensemble de ces taches figure le contour général du relief considéré. Pour des raisons de simplification, les différentes aires et zones sont représentées sur la figure 1 par des formes géométriques. Dans la réalité, elles peuvent avoir un contour à la fois moins régulier et moins précis.

Les symboles 12 quant à eux servent principalement à marquer les emplacements où ont été détectés des échos nécessitant l'attention de l'opérateur. La détection de ces échos peut par exemple être réalisée en fonction d'un dépassement de seuil d'amplitude par le signal reçu. Dans le cas d'une image obtenue par mise en oeuvre d'un sonar non-doppler, les échos détectés sont généralement représentés par des symboles de forme identique, par exemple, sous forme de cercles, dont les tailles sont fonction de l'intensité des échos détectés.

En ce qui concerne les sonars émettant des signaux à large bande de type HFM, la visualisation des échos reçus ne présente donc pas, a priori, de difficulté particulière. Chaque écho, caractérisé par sa position et son intensité, peut être représenté sans perte d'information sur une image plane. En revanche, l'exploitation de ce type de sonar souffre de la limitation apportée par l'absence de caractérisation de la vitesse des échos détectés et par une incertitude sur leur distance exacte, dans la mesure où la vitesse de la cible est inconnue. La représentation ne fait donc pas apparaître le caractère fixe ou mobile de l'écho considéré.

Ainsi comme l'illustre la figure 1, deux échos ayant des vitesses différentes seront représentés de manière identique sur un écran de visualisation. Cette similitude de représentation contraint l'opérateur en présence d'un grand nombre d'échos, à une vigilance accrue destinée à distinguer les échos fixes des échos mobiles, au travers des rafraîchissements successifs de l'image.

La figure 2 illustre la difficulté que revêt la représentation dans un plan des informations relatives aux échos détectés par un sonar, de type FP par exemple, émettent une onde à spectre de raies. Avec ce type de sonar il est possible de caractériser un écho reçu en fonction de sa position et de sa fréquence doppler, c'est à dire c'est à dire de la distance et de la vitesse de l'objet ayant renvoyé l'écho. Pour obtenir une représentation visuelle qui mette simultanément en évidence les vitesses des échos reçus, on est conduit à employer une représentation plus complexe, en trois dimensions par exemple. Cette représentation peut par exemple prendre la forme d'une vue en perspective semblable à l'illustration de la figure 2. Une telle représentation peut être assimilée à un empilement de représentations planes pᵢ suivant les axes gisement-distance, chaque représentation plane faisant apparaître les aires 22 et les symboles 23 correspondant aux échos reçus et aux échos détectés ayant une fréquence doppler fd donnée. Chaque plan pᵢ constitue ainsi une image sur laquelle sont positionnées des aires de différentes tailles et des symboles, les aires les plus intenses correspondant au signal de réverbération pour la fréquence doppler considérée.

La réverbération, dans la mesure où elle peut être considérée comme une juxtaposition de multiples cibles fixes, est affectée d'un effet doppler dû au seul mouvement du bateau porteur. Ainsi, aux symétries géométriques près, il y a correspondance d'évolution entre gisement et fréquence doppler. Cette concordance explique l'évolution des zones 22 d'un plan doppler pᵢ à l'autre sur la figure 2.

Le nombre de plans pᵢ affichables et l'écart de fréquence doppler Δfd entre chaque plan sont donnés par les caractéristiques de bande doppler analysée et de résolution doppler du sonar utilisé.

Une telle représentation, bien que répondant aux besoins, apparaît comme délicate à exploiter. En effet malgré l'effet de volume et même si l'on utilise des artifices de couleurs et de symboles cet empilement de plan est très difficile à analyser simultanément. C'est pourquoi le mode d'exploitation utilisé couramment consiste en une visualisation plan par plan, un seul plan pᵢ étant visualisé à la fois. Ce mode d'exploitation est illustré par les figures 3 et 4.

La figure 3 présente de manière schématique l'image correspondant à la représentation en perspective du plan pᵢ présentée sur la figure 2. Elle correspond pour la fréquence fd₁ à l'image sonar que fournit un système sonar à émission à spectre de raies. Sur cette image sont représentés les symboles 23 correspondant aux échos détectés dont la fréquence doppler est située dans la zone de résolution doppler centrée sur la fréquence Fd₁. De même, le signal correspondant à la réverbération est représenté par la zone 22, qui ne s'étend que sur une partie de l'axe gisement.

La figure 4 présente quant à elle l'image correspondant à la représentation en perspective du plan p₂ présentée sur la figure 2. On y retrouve comme sur la figure 3 des symboles 23 et deux zones 22 correspondant à la réverbération panoramique.

Dans les systèmes sonars actuels, l'opérateur exploite les échos reçus aux travers d'images telles que celles illustrées par les figures 3 et 4. L'opérateur peut sélectionner une image donnée en affichant par exemple la valeur de la fréquence doppler fdᵢ choisie.

Les figures 3 et 4 mettent en évidence les difficultés liées à l'utilisation d'un tel mode de visualisation.

La première difficulté porte sur la représentation du signal provenant de la réverbération panoramique. En effet comme on peut notamment le constater sur la figure 2, les échos de réverbération sont répartis sur différents plans pᵢ. Suivant le plan que l'on analyse, la position et la taille des aires 22 qui représentent principalement les échos de réverbération, varient sensiblement de sorte qu'il n'est pas toujours possible d'associer le contour global d'un ensemble de tache à celui d'un élément de réverbération.

Ainsi sur la figure 2, le signal de réverbération se présente dans le plan p₁ correspondant à la fréquence Fd₁, comme une aire centrée autour de l'axe correspondant à un gisement de 0°. En revanche, dans le plan p₂ correspondant à la fréquence Fd₂ il se présente sous la forme de deux aires latérales situées de part et d'autre de cet axe. Plus généralement, la répartition sur l'axe gisement des aires qui constituent la réverbération dans les différents plans pᵢ, correspond à la trace pointillée 24.

La restitution de l'aspect général de la réverbération ne peut être réalisée qu'en effectuant la réunion des aires correspondantes à la réverbération panoramique, qui apparaissent dans les différents plans pᵢ.

La deuxième difficulté de la visualisation par plan, est une difficulté liée à l'exploitation des informations par l'opérateur. En effet dans un contexte ordinaire, la représentation en trois dimensions n'est pas possible avec le matériel utilisé. L'opérateur ne peut avoir accès qu'à une image plane telle que celles des figures 3 et 4, correspondant à un plan pᵢ donné. Ainsi pour visualiser l'ensemble des échos présents l'opérateur est conduit à afficher successivement les différentes images correspondant à l'ensemble des plans pᵢ. Cette opération d'affichages successifs s'avère à la fois fastidieuse, peu efficace en terme de surveillance et incompatible d'une exploitation temps réel.

Pour faciliter dans une certaine mesure la sélection de l'image visualisée, l'opérateur dispose généralement de la possibilité d'afficher une image complémentaire. Cette image consiste dans la représentation dans le plan gisement-doppler, pour une distance D sélectionnable par l'opérateur, des échos détectés et des échos de réverbération. Cette représentation est illustrée par la figure 5.

L'illustration de la figure 5 présente une vue en coupe, dans le plan gisement-doppler, de l'illustration de la figure 2; la coupe étant réalisée selon un plan perpendiculaire aux plans pᵢ et passant par une droite 25, située par exemple à une distance D du sonar. L'image présente des symboles 22 correspondant à des échos détectés ayant des fréquences doppler différentes et situés à une même distance D, ainsi qu'une zone 24 correspondant en particulier à la réverbération panoramique.

Comme l'illustre la figure 5, la réverbération est matérialisée par un grand nombre d'échos dont la fréquence doppler varie en fonction du gisement dans la bande doppler du sonar, formant ainsi la zone 24. Cette constatation est par ailleurs généralisable à toute image gisement-doppler correspondant à un plan passant par une droite située à une distance D correspondant à la zone de détection du fond marin par le sonar.

L'exploitation des systèmes sonar à émission à spectre de raies couramment utilisés consiste en général à associer l'image correspondant à une représentation dans le plan gisement distance pour une fréquence doppler donnée, avec celle correspondant à une représentation dans le plan gisement doppler pour une distance donnée. L'association de deux images est généralement facilitée par l'établissement de liens automatique entre les deux types d'images. Certains systèmes permettent ainsi, par exemple, de sélectionner au moyen d'un curseur, sur la représentation gisement-doppler correspondant à une distance D₁, une fréquence doppler fd₁ donnée et de visualiser la représentation gisement-distance correspondant à la fréquence fd₁. Inversement, les mêmes systèmes permettent de sélectionner une distance D₂ sur la représentation gisement-distance et de visualiser la représentation gisement-doppler correspondante. Néanmoins ce type de manipulation d'images reste fastidieux et trop lent pour une véritable exploitation temps réel.

Pour permettre une exploitation rapide et efficace des échos reçus et bénéficier en même temps d'une bonne restitution de la réverbération panoramique, le procédé selon l'invention propose une exploitation différente des informations obtenues notamment par le traitement doppler.

Le procédé selon l'invention consiste à réaliser une image synthétique dans un plan gisement-distance, représentant sous forme de symboles tous les échos détectés. La forme ou la nature des symboles utilisés par le procédé pour représenter un écho, est différente selon que l'écho est fixe ou mobile. Sur cette image synthétique figurent également des aires élaborées de manière artificielle, destinées à reconstituer fidèlement la réverbération panoramique de façon à ce que l'opérateur ait un aperçu de la réverbération lui permettant d'analyser facilement les échos affichés.

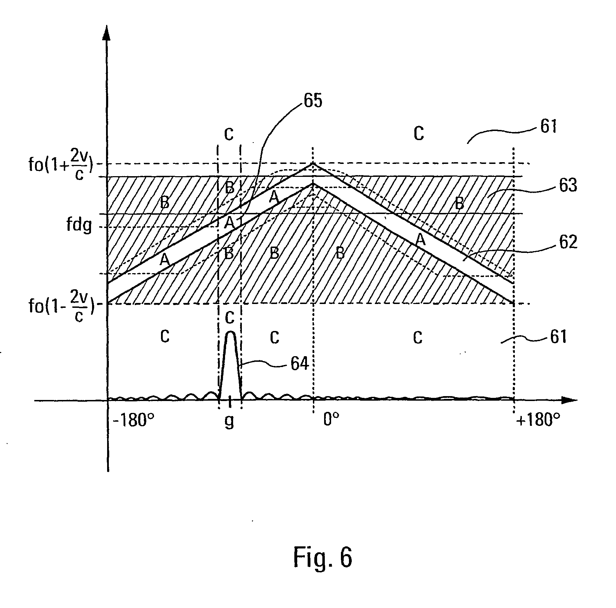

L'illustration de la figure 6 illustre le principe sur lequel se fonde le procédé selon l'invention. Elle présente, pour une distance donnée quelconque, une partition d'un plan de représentation gisement-doppler des échos reçus tel que celui présenté sur la figure 5. Cette partition est réalisée en associant la fréquence doppler des échos, avec la vitesse et la position des objets ayant renvoyé ces échos.

Quand on parle de vitesse des échos on fait de manière générale référence à la fréquence doppler qui affecte la fréquence du signal réfléchi par un objet situé dans le secteur insonifié par le sonar. Cette fréquence doppler est fonction de la vitesse radiale relative de l'objet par rapport au navire porteur du sonar. Elle est également fonction du gisement dans lequel se trouve l'objet, le gisement représentant l'écart angulaire entre la droite reliant le sonar à l'objet et le cap suivi par le navire porteur.

Des calculs menés par ailleurs montrent que quel que soit l'objet, la fréquence doppler fd de l'écho est comprise entre les valeurs fd_{min =} f₀·(1-2v/c) et fd_{max =} f₀·(1+2vlc), où v représente la vitesse du navire porteur suivant son cap, c la vitesse de propagation de l'onde acoustique dans le milieu et où f₀ symbolise la fréquence d'émission du sonar.

D'autre part on montre également que la fréquence doppler fd décroît de fdₘₐₓ à fdₘᵢₙ, de façon sensiblement linéaire, à mesure que la valeur du cosinus du gisement augmente en valeur absolue.

En conséquence, comme l'illustre la figure 6, il est possible dans une représentation des échos dans un plan gisement-doppler de distinguer trois zones. La première zone 61, baptisée "zone C", correspond à la partie du domaine doppler pour laquelle aucune fréquence doppler ne peut correspondre à un écho fixe. Cette zone est située de part et d'autre du domaine compris entre fdₘₐₓ et fdₘᵢₙ et s'étend sur l'axe gisement de -180° à +180°.

Inversement, la zone 62 baptisée "zone A", correspond à la partie du domaine doppler dans laquelle se répartissent, en fonction du gisement, les fréquences doppler correspondant à des échos fixes. Cette zone se présente comme une bande étroite à l'allure d'un chevron s'étendant sur un gisement allant de -180° à +180° et dont l'amplitude varie de fdₘₐₓ à fdₘᵢₙ. La largeur de la bande A est notamment fonction de la résolution en fréquence du sonar.

Le reste du domaine compris entre fdₘₐₓ et fdₘᵢₙ et ne correspondant pas à la zone A constitue la zone 63 baptisée "zone B".

La figure 6 permet de comprendre l'intérêt du découpage en zones A, B et C au travers de l'exemple particulier d'un sonar dont l'une des voies de réception d'ouverture angulaire Δg, est orientée dans le gisement g. Cette voie de réception est symbolisée par le diagramme 64.

Pour cette voie de réception particulière, un écho fixe sera affecté d'une fréquence doppler Fdg contenue dans la partie 65 de la zone A de largeur Δg autour de g. En revanche pour une autre voie de réception orientée dans un gisement g', un écho fixe sera affecté d'une fréquence doppler Fd_{g}, contenue dans une autre partie de la zone A de largeur Δg autour de g'. Ainsi, l'écho d'un objet fixe présentant une certaine étendue en gisement, comme c'est le cas d'un relief du fond sous-marin par exemple, sera détecté au travers de plusieurs voies de réception et sera affecté d'une fréquence doppler différente pour chaque voie.

De la sorte lorsqu'un tel écho est représenté comme sur les figures 3 et 4, dans un plan gisement-distance pᵢ, pour une fréquence doppler donnée, il fait l'objet d'une représentation partielle qui peut gêner son identification correcte par un opérateur. De même l'écho étendu provenant de la réverbération du fond marin fait l'objet d'une représentation partielle dans chacun des plans gisement-distance pᵢ.

Le principe d'identification des échos reçus par leur appartenance à une des zones A, B et C, est mis à profit par le procédé selon l'invention de deux façons.

Tout d'abord les échos détectés sont classés en échos fixes ou mobiles suivant que leur fréquence doppler appartient à la zone A ou à l'une des zones B ou C. Les échos détectés ainsi classés peuvent être représentés dans un plan gisement-distance par des symboles distincts.

D'autre part, le signal de réverbération du fond marin, par nature étendu, correspond à une multitude d'échos dont les fréquences doppler appartiennent à la Zone A. On peut donc réaliser une représentation de la réverbération dans un plan gisement-distance en affichant pour chaque intervalle de gisement Δg l'image du signal dont la fréquence doppler est contenue dans la zone A.

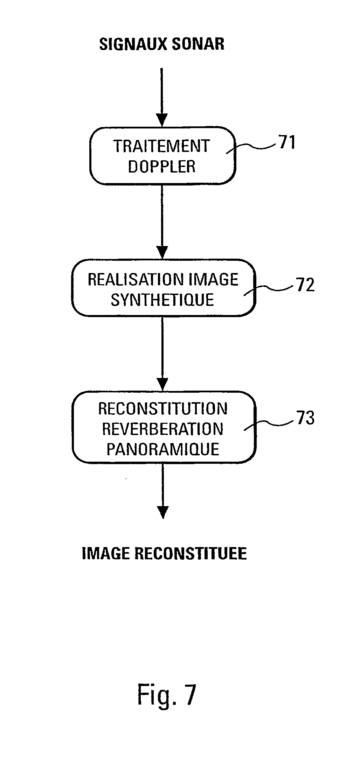

La figure 7 présente sous forme d'organigramme la succession des étapes principales que comporte le procédé selon l'invention. L'organigramme proposé est donné à titre d'exemple, le procédé pouvant être mis en oeuvre suivant de légères variantes ou encore enrichi d'étapes compléméntaires.

Le procédé selon l'invention comporte ainsi une première étape 71 de traitement doppler et de détection qui permet notamment de distinguer les échos dont le niveau dépasse un seuil de détection donné et de classer les échos détectés en échos fixes et échos mobiles.

Le procédé comporte ensuite une deuxième étape 72 de réalisation d'une image sonar synthétique positionnant les échos détectés dans un plan gisement-distance. Chaque écho est figuré par un symbole, ce symbole employé étant différent selon que l'écho est fixe ou mobile. La taille du symbole est par ailleurs fonction du niveau de l'écho reçu.

Le procédé comporte enfin une troisième étape 73, consistant à restituer sur l'image synthétique une représentation reconstituée de la réverbération, et en particulier de la réverbération du fond marin. Cette reconstitution est réalisée en affichant sur l'image l'ensemble des échos dont la fréquence doppler se situe pour chaque voie de réception au milieu de la partie 65 correspondante de la zone A.

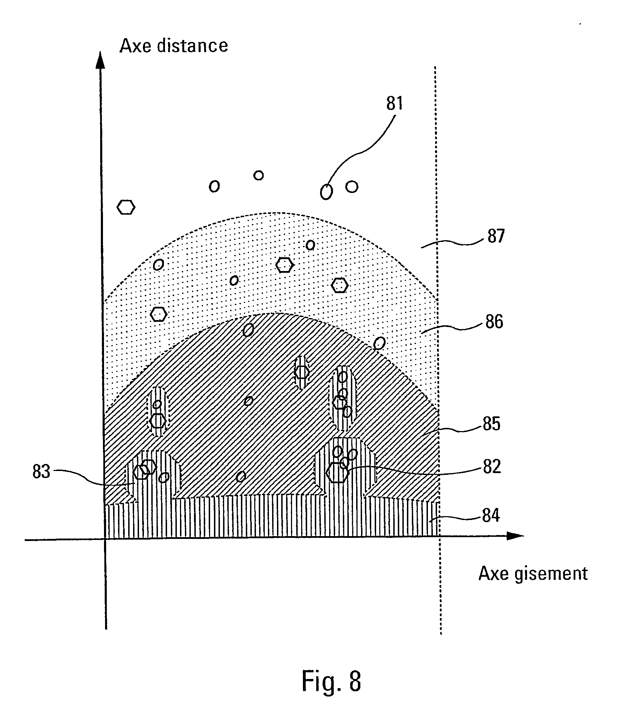

La figure 8 donne une représentation schématique de l'image obtenue. Cette image est à comparer avec les image connues de l'art antérieur, aussi bien celle de la figure 1 qui présente une image sonar obtenue avec un système sonar à émission large spectre, que celle des figure 3 et 4 qui présente les images partielles obtenues pour des fréquences doppler particulières, avec un système sonar à émission à spectre de raies.

Sur l'image représentée à la figure 8 on peut distinguer des symboles 81 et 82 qui représentent respectivement des échos détectés mobiles et fixes. Cette distinction entre échos fixes et mobiles est réalisée par l'affichage de symboles différents. Elle est rendue avantageusement possible grâce à l'utilisation du traitement doppler par le procédé selon l'invention.

L'image de la figure 8 comporte également des aires 83 correspondant à des zones de réverbération dont l'association visuelle donne une représentation d'éléments étendus, comme par exemple des éléments de relief constituant la réverbération panoramique du fond marin. Ces taches sont reconstituées comme indiqué précédemment à partir des échos de la zone A. Cette image restitue ainsi avantageusement une représentation des éléments constituant la réverbération. Elle permet à l'opérateur d'analyser les échos détectés, comme cela est possible sur une image d'un système sonar à spectre large tel que celle représentée schématiquement sur la figure 1, en ayant connaissance d'une éventuelle présence d'éléments de relief à proximité. Dans la mesure où les signaux de la zone A y sont représentés, l'image de la figure 8 présente une image de la réverbération du fond marin dont le niveau décroît de manière plus ou moins régulière en fonction de la distance. Cette image est représentée de manière approximative sous la forme des zones 84 à 87.

Le procédé selon l'invention permet donc de combiner les avantages de lisibilité présentés par les images sonar obtenues à partir de sonar à émission à large spectre aux avantages liés au à l'exploitation de l'effet doppler par les sonars à émission à spectre de raies. On obtient ainsi sur une seule image représentée dans le plan gisement-doppler une représentation différentiée des échos fixes et mobiles détectés, sur laquelle figure également une présentation reconstituée de la réverbération de fond, de surface ou de volume.

## Revendications

1. Procédé de visualisation des échos reçus par un sonar actif utilisant une émission à spectre de raies, cette visualisation étant réalisée sur un écran panoramique, **caractérisé en ce qu'**il comporte au moins :
- une étape (71) de traitement doppler du signal reçu, cette étape permettant de classer les échos reçus en échos fixes et mobiles, en fonction de leur fréquence doppler ;
- une étape (72) de création d'une image synthétique représentant dans un plan gisement-distance l'ensemble des échos détectés sous forme de symboles, les échos fixes (81) et mobiles (82) étant représentés par des symboles distincts ;
- une étape (73) de restitution sur l'image de la réverbération panoramique reconstituée, la reconstitution de la réverbération panoramique étant réalisée en affichant pour chaque point de l'image, repéré par sa distance et son gisement, l'écho dont la fréquence doppler se situe au centre d'une zone A (62), correspondant aux fréquences doppler relatives aux échos fixes.

2. Procédé selon la revendication 1, **caractérisé en que** l'image synthétique produite comportant à la fois la réverbération panoramique reconstituée et les échos fixes et mobiles détectés, ces échos sont représentés par des aires dont la couleur et la taille varient en fonction du niveau et de la durée de l'écho reçu.

3. Procédé selon la revendication 1, **caractérisé en ce que,** sur l'image synthétique produite, les symboles mettant en évidence les échos détectés ont des tailles qui sont fonction du niveau des échos reçus correspondants.

## Claims

1. A process for visualising the echoes received by an active sonar using an emission line spectrum, this visualisation being produced on a panoramic screen, **characterised in that** it comprises at least:
- a step (71) for Doppler processing of the received signal, this step allowing the echoes received to be classified as fixed or mobile echoes as a function of their Doppler frequency;
- a step (72) for creating a synthetic image representing all of the echoes detected in a range-bearing plane as symbols, the fixed (81) and mobile (82) echoes being represented by distinct symbols;
- a step (73) for plotting the reconstituted panoramic reverberation on the image, the reconstitution of the panoramic reverberation being realised by displaying on each point of the image, identified by its distance and its bearing, the echo with a Doppler frequency which is located in the centre of a zone A (62) corresponding to the Doppler frequencies relating to the fixed echoes.

2. The process according to claim 1, **characterised in that** the produced synthetic image comprises both the reconstituted panoramic reverberation and the detected fixed and mobile echoes, these echoes being represented by areas, the colour and size of which vary as a function of the level and the duration of the echo received.

3. The process according to claim 1, **characterised in that** the sizes of the symbols depicting the detected echoes on the produced synthetic image depends on the level of the corresponding received echoes.

## Patentansprüche

1. Verfahren zum Visualisieren der von einem aktiven Sonar empfangenen Echos mit einem Emissionslinienspektrum, wobei diese Visualisierung auf einem Panoramabildschirm erzeugt wird, **dadurch gekennzeichnet, dass** es wenigstens Folgendes beinhaltet:
- einen Schritt (71) der Doppler-Verarbeitung des empfangenen Signals, wobei dieser Schritt die Klassifizierung der empfangenen Echos in feste oder mobile Echos in Abhängigkeit von ihrer Doppler-Frequenz ermöglicht;
- einen Schritt (72) der Erzeugung eines synthetischen Bildes, das alle erfassten Echos als Symbole in einer Peilwinkel-Entfernung-Ebene darstellt, wobei die festen (81) und mobilen (82) Echos durch getrennte Symbole repräsentiert werden;
- einen Schritt (73) der Wiedergabe des wiederhergestellten panoramischen Nachhalls auf dem Bild, wobei die Wiederherstellung des panoramischen Nachhalls durch Anzeigen auf jedem Punkt des Bildes erzeugt wird, geortet anhand seiner Entfernung und seines Peilwinkels, wobei das Echo, dessen Doppler-Frequenz in der Mitte einer Zone A (62) liegt, den Doppler-Frequenzen in Bezug auf die festen Echos entspricht.

2. Verfahren nach Anspruch 1, **dadurch gekennzeichnet, dass** das erzeugte synthetische Bild sowohl den wiederhergestellten panoramischen Nachhall als auch die erfassten festen und mobilen Echos umfasst, wobei diese Echos durch die Bereiche dargestellt werden, deren Farbe und Größe in Abhängigkeit von Pegel und Dauer des empfangenen Echos variieren.

3. Verfahren nach Anspruch 1, **dadurch gekennzeichnet, dass** die Größen der die erfassten Echos darstellenden Symbole auf dem erzeugten synthetischen Bild vom Pegel der entsprechenden empfangenen Echos abhängen.
